Europäisches Patentamt

European Patent Office

Office européen des brevets

(11) Publication number: **0 168 655**
**A1**

# EUROPEAN PATENT APPLICATION

(21) Application number: **85107507.7**

(22) Date of filing: **18.06.85**

(51) Int. Cl.⁴: **A 24 F 13/18**, B 60 N 3/08

(30) Priority: **27.06.84 IT 2240984 U**

(43) Date of publication of application: **22.01.86**
**Bulletin 86/4**

(84) Designated Contracting States: **AT BE CH DE FR GB LI LU NL SE**

(71) Applicant: **Longo, Gianni, Via S. Damiano, 11, I-20100 Milano (IT)**

(72) Inventor: **Longo, Gianni, Via S. Damiano, 11, I-20100 Milano (IT)**

(74) Representative: **Modiano, Guido et al, MODIANO, JOSIF, PISANTY & STAUB Modiano & Associati Via Meravigli, 16, I-20123 Milan (IT)**

(54) Cigarette extinguishing device particularly for motor car passenger compartments.

(57) The cigarette extinguishing device particularly for motor car passenger compartments comprises a supporting element (2) associable with a rest surface (11) and a body (4) removably coupleable with said supporting element (2) and defining on its interior a cavity (5) formed with an opening (6) at one end thereof for the introduction of the end of a cigarette (13).

- 1 -                    0168655

## CIGARETTE EXTINGUISHING DEVICE PARTICULARLY FOR
## MOTOR CAR PASSENGER COMPARTMENTS

This invention relates to a cigarette extinguishing device particularly for motor car passenger compartments.

Known are devices which serve the dual function of collecting the ash from a burning cigarette and of holding the cigarette filter tips after the butts have been snuffed out. Specifically, a cigarette is generally stubbed out by squeezing its embers against a surface presented by the above devices, commonly referred to as ashtrays.

Said prior devices are not free of drawbacks, including the fact that in order to stubb out a cigarette, some care must be exerted if this operation is to be successfully completed; the operation, besides constituting an inconvenience, may also turn out to be a dangerous one for anyone involved in activities that require some concentration, such as driving a motor car.

Another disadvantage of such prior devices is that, if incompletely extinguished, a cigarette, once laid in the ashtray, will continue to burn and emit smoke, which is annoying especially in such confined spaces as the interior of a motor vehicle.

A not least inconvenience comes from the potential danger of a burning cigarette when its combustion is completed within an ashtray.

It is a primary aim of this invention to obviate the above problems affecting prior devices by providing a device which allows a cigarette to be extinguished in a straightforward and quick manner without the user being required to perform any difficult operations.

Within that aim, it is an important object of the invention to arrange for the extinguishing operation to be accomplished without the emission of smoke.

Another important object of the invention is to arrange for a device as indicated to be readily attachable to any surfaces, and particularly to the inside surface of an ashtray or the dashboard of a motor car.

Another object is to allow easy cleaning of the device.

The above aim, as well as these and other objects, is achieved by a cigarette extinguishing device particularly for motor car passenger compartments, characterized in that it comprises a support element associable with a rest surface, and a body removably coupleable with said support element and defining on its interior a cavity formed with an opening at one end thereof for the introduction of the end of a cigarette.

It will be appreciated that the invention has to cope with two problems, which are in a kind of antagonistic relationship to each other. In fact, in order to solve the problem of extinguishing the cigarette a structure is required, which creates considerable cleaning problems.

As it appears from the above definition of the invention, these antagonistic problems are both solved by providing a composite structure for the claimed device, the component parts of which are easily and rapidly assemblable and replaceable, only one of these component parts, i.e. the one which does not require frequent cleaning, being fixedly supported on a resting or supporting structure, whereas the other component part which requires frequent cleaning is removably assemblable and is also replaceable, so that such part may be easily and rapidly cleaned when removed from the fixedly supported part or, else, replaced by another identical but clean part. In this way the user may store in his car a number of replaceable component parts, which may be easily mounted on the fixedly supported structure as replacement for the component part to be cleaned. In this way the cleaning may be carried out later and the cigarette extinguishing device may always be ready for use.

Further features and advantages will become apparent from the following detailed description of a device according to the invention, with reference to the accompanying illustrative drawing, in which:

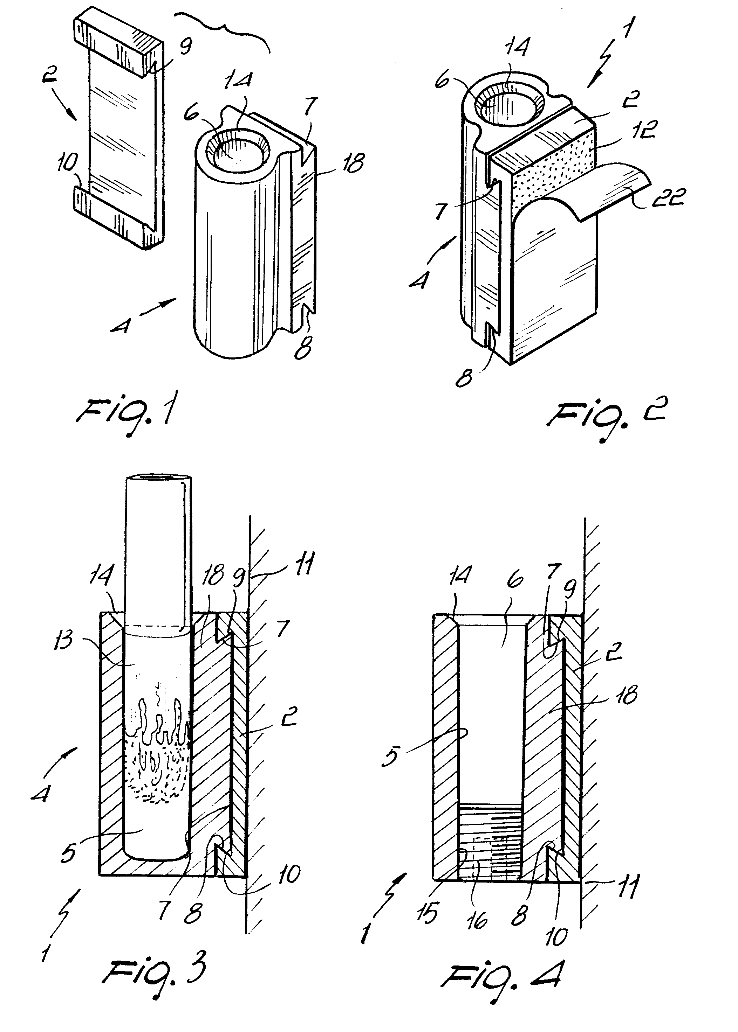

Figure 1 is an exploded perspective view of this device;

Figure 2 is a perspective view of the device;

Figure 3 shows a cross-section through the device as associated with a rest surface and accommodating a cigarette; and

Figure 4 shows a cross-section through the device as incorporating a closure element.

With reference to the drawing figures, the device of this invention, generally indicated at 1, comprises a support element 2 associable with a rest surface 11, and a body 4 defining on its interior a substantially cylindrical cavity 5 formed at one of its ends with an opening 6 for the introduction of a cigarette 13. The cavity has a dead end and a diameter corresponding to the diameter of the cigarette to be extinguished.

Advantageously, according to the invention, the body 4 is removably coupleable with the support element 2 by means of dovetailed guides 7 and 8, defined by a side surface 18 of the body 4.

The guides 7 and 8, which in the accompanying drawing extend perpendicularly to the vertical axis of the body 4, but in practice may lay in any plane, engage with grooves 9 and 10 presented by the support element 2 and defining mating surfaces with said dovetailed guides 7 and 8.

In particular, the support element 2 is provided, on its surface to be associated with the rest surface 11, with a layer 12 of an adhesive material which allows connection of the element 2 to the surface 11; the adhesive material layer 12 is covered by a protective tab 22 which can be easily removed.

For completion of illustration, it should be noted that the opening 6 has, on the cigarette 13 introduction side, a mouth defined by a frusto-conical surface 14 to facilitate penetration by the cigarette 13.

Lastly, the cavity 5 may be formed, on the remote surface thereof from the opening 6, with a seat 15 for the insertion of a closure element 16 whose removal facilitates cleaning of the cavity 5.

Advantageously the closure element 16 may be in the form of an "Allen" screw.

Operation is as follows.

Once the tab 22 is removed, the support element is ready for association with a rest surface. This operation may be carried out either with the body 4 coupled with the support element 2, or, after the association of the support element with the rest surface is completed, the body 41 is next coupled by positioning the dovetailed guides 7, 8 presented by the body 4 at one end of the grooves 9, 10 provided on the support element 2, and then by a transverse translation of the body 4 relatively to the support element 2, the coupling is effected.

With the completion of this operation, the device is ready for use.

On introducing the lighted end of a cigarette into the cavity presented by the body, the embers, being located within a space wherein the oxygen required for combustion is only present in marginal amounts, will tend to be immediately extinguished and the smoke will be captured in the portion of the cavity 5 defined at the top by the cigarette and at the bottom, by the cavity bottom.

In fact, when the cigarette tip is introduced into the cavity 5, it acts as a plug which prevents air from reaching the space between the cigarette tip and the bottom of the cavity, so that the small quantity of oxygen contained therein is rapidly consumed, so that the cigarette extinguishes rapidly with the production of a very small quantity of smoke.

The extinguished cigarette may be extracted from the cavity and thrown away or else, if the cigarette tip has a small length it may be pushed entirely into the cavity, so that the next cigarette may be extinguished within the space left in the cavity by the previous cigarette tip. Afterwards the cavity may be cleaned by easily removing the body 4 from the holder or support element 2, which may then be easily cleaned even by unscrewing the "Allen" screw forming the bottom thereof.

Of course, the materials used and related constructional details may vary within the purview of the same inventive concept.

## CLAIMS

1. A cigarette extinguishing device particularly for motor car passenger compartments, characterized in that it comprises a support element (2) associable with a rest surface (11), and a body (4) removably coupleable with said support element (2) and defining on its interior a cavity (5) formed with an opening (6) at one end thereof for the introduction of the end of a cigarette (13).

2. A cigarette extinguishing device particularly for motor car passenger compartments, according to Claim 1, characterized in that said support element (2) comprises connection means (12) adapted for connecting said support element to said rest surface (11).

3. A cigarette extinguishing device particularly for motor car passenger compartments, according to Claims 1 and 2, characterized in that said body (4) is provided, on a side surface thereof, with two dovetailed guides (7,8) for engagement with the grooves (9,10) provided on said support element (2) and defining mating surfaces with said dovetailed guides (7,8).

4. A cigarette extinguishing device particularly for motor car passenger compartments, according to Claim 1, characterized in that said support element (2) includes means for connection to said rest surface (11) comprising a layer (12) of an adhesive material.

5. A cigarette extinguishing device particularly for motor car passenger compartments, according to Claim 1, characterized in that said opening (6) has a mouth defined by a frusto-conical surface (14) adapted for facilitating the introduction of said one cigarette (13) thereinto.

6. A cigarette extinguishing device particularly for motor car passenger compartments, according to Claim 1, characterized in that said cavity (5) is formed, at the remote end thereof from said opening (6), with a seat (15) adapted for accommodating a closure element (16) removably insertable thereinto.

1/1

0168655

Fig.1

Fig.2

Fig.3

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 377 776 (VIEVILLE)<br><br>* Figures 1,2; page 1, lines 25-36 *<br><br>--- | 1,2,4-6 | A 24 F 13/18<br>B 60 N 3/08 |
| X | US-A-3 994 308 (PANCER)<br><br>* Figure 3; column 2, lines 39-68 *<br><br>--- | 1,2,4,5 | |
| A | DE-A-3 043 241 (BRÜHNING)<br>* Figure 5; page 4, lines 25-32 *<br><br>----- | 1-3 | |

**TECHNICAL FIELDS SEARCHED (Int. Cl.4)**

A 24 F
B 60 N

The present search report has been drawn up for all claims

| Place of search | Date of completion of the search | Examiner |
|---|---|---|
| THE HAGUE | 26-09-1985 | RIEGEL R.E. |